(19)

Europäisches Patentamt
European Patent Office
Office européen des brevets

(11) **EP 3 502 294 A1**

(12) **EUROPEAN PATENT APPLICATION**

(43) Date of publication:
26.06.2019 Bulletin 2019/26

(21) Application number: 17382900.3

(22) Date of filing: 22.12.2017

(51) Int Cl.:
C22C 38/00 (2006.01)   C22C 38/02 (2006.01)
C22C 38/42 (2006.01)   C22C 38/44 (2006.01)
C22C 38/52 (2006.01)   C22C 38/58 (2006.01)
C22C 38/04 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(71) Applicant: Tubacex Innovación A.I.E.
48160 Derio - Vizcaya (ES)

(72) Inventors:
• LÓPEZ FERNÁNDEZ, Alejandra
  48160 Derio, Vizcaya (ES)
• RODRÍGUEZ MARTÍN, Raquel
  48160 Derio, Vizcaya (ES)

(74) Representative: Balder IP Law, S.L.
Paseo de la Castellana 93
5ª planta
28046 Madrid (ES)

(54) **DUPLEX STAINLESS STEEL RESISTANT TO CORROSION**

(57)   The present invention is directed to a duplex stainless steel alloy which contains the following elements, in % by weight with respect to the total weight of the composition: C: 0.03% or less; Si: 0.5% or less; Mn: 2.5% or less; Cr: more than 30.0% up to 35.0%; Ni: 5.5% to 8.0%; Mo: 2.0% to 2.5%; W: 2.5% or less; Co: 0.01% to 0.8%; N: 0.3% to 0.6%; Cu: 1.0% or less; having one or more of the following: Ca: 0.0040% or less; Mg: 0.0040% or less; one or more rare earth elements in a total amount of 0.1% or less; the remainder being Fe and unavoidable impurities; and wherein the relationship $CRC = 1.062*(Ni + Co) + 4.185*Mo$ is between 14.95 and 19.80. The duplex stainless steel alloy displays a high resistance to corrosion and is specially suitable for use in the production of urea.

EP 3 502 294 A1

**Description**

TECHNICAL FIELD

The present disclosure relates to a corrosion resistant duplex stainless steel (ferritic austenitic steel) with high chromium content which is suitable for use in environments where a high resistance to corrosion is needed, for example in materials requiring urea and chloride resistance, such as a plant for the production of urea or in seawater applications. The disclosure also relates to objects made of said duplex stainless steel and uses of the duplex stainless steel.

PRIOR ART

Duplex stainless steel refers to ferritic austenitic steel alloy. Such steels have a microstructure comprising ferritic and austenitic phases where the two phases have different compositions. Modern duplex stainless steels are mainly alloyed with chromium (Cr), molybdenum (Mo), nickel (Ni) and nitrogen (N). The duplex structure implies that Cr and Mo will be enriched in the ferrite and Ni and N in the austenite. Other elements, such as manganese (Mn), copper (Cu), silicon (Si), tungsten (W) and cobalt (Co) also occur in order to give the alloys special properties. Thus in the current disclosure the term "duplex stainless steel" is equivalently used to "austenoferritic steel" and/or "ferritic austenitic steel" as the skilled person in the art would do.

The duplex stainless steels are highly corrosion resistant and can therefore be used, for instance, in the highly corrosive environment of a urea manufacturing plant, wherein parts thereof are exposed to concentrated ammonium carbamate at high temperature and/or high pressure. A measurement of corrosion resistance used in the art is the Pitting Resistance Equivalent Number (PREN) as a means of ranking the corrosion grade. The higher the PREN, the more resistant to corrosion the steel is. The PREN is defined as follows:

$$PREN = \%Cr + 3.3*\%Mo + 16*\%N$$

When the Mo content is higher than 1.5%, the PREN value takes W into account, so that the modified PREN (also known as PREW) takes the form of:

$$PREN = \%Cr + 3.3*(\%Mo+0.5*\%W) + 16*\%N$$

Urea is produced from $NH_3$ (ammonia) and $CO_2$ (carbon dioxide). In order for the reaction to take place, high pressure and temperature are required. Pressure typically varies between 140 and 210 bars and temperature between 180 and 210 $\underline{o}$C, depending on the technology of the process.

In this synthesis, two consecutive reaction steps can be considered to take place. In the first step (i), ammonium carbamate is formed, and in the next step (ii), this ammonium carbamate is dehydrated so as to provide urea.

(i) $2NH_3 + CO_2 \rightarrow 4\ H_2N\text{-}COONH_4$
(ii) $H_2N\text{-}COONH_4 \rightarrow H_2N\text{-}CO\text{-}NH_2 + H_2O$

Ammonium carbamate, an intermediate product, is highly corrosive to the metallic construction materials, even to the most resistant stainless steel alloys.

This represents a problem in that the urea manufacturing equipment, even though it is made from stainless steel, it corrodes and is prone to early replacement.

Resistance to corrosion in a stainless steel lies in the presence of a protective oxide layer in the surface of the metal. While this layer remains intact, the metal will be corroded at a low rate; urea-grade stainless steel materials have a corrosion rate of less than 0.10 mm/year. However, once the passivated layer is deteriorated the corrosion rate can raise up to 50 mm/year.

Traditionally, obtaining a protective oxide layer is achieved by periodically injecting small amounts of oxygen (in the form of air) into the plant circuit, so that a passive layer of oxide is formed and thus protects the stainless steel surface exposed to the medium.

However, due to the presence of $CO_2$ and $NH_3$, the system might contain hydrogen traces that can react with the oxygen introduced to passivate the circuit and generate an explosive mixture if both substances accumulate at any given time in a specific location of the plant.

Austenitic stainless steels can be exposed to a carbamate solution while maintaining the protective passivated layer for a certain time, determined by the amount of oxygen in the medium. If the oxygen content goes below that limit, corrosion starts. Thus, austenitic stainless steels have partially improved the situation, but are still ineffective under very harsh conditions. For example, in some urea technologies, ammonia is used as a stripping agent (ammonia-stripping processes), or the stripping is performed only by supplying heat, without any stripping agent (self-stripping process, or thermal stripping process). In particular, this technology has a high pressure section, which is particularly demanding from the corrosion viewpoint, due to the presence of a concentrated ammonium carbamate solution. Similar problems are also present in other kinds of urea production plants.

The austenoferritic steel described in patent WO95/00674, also known with the trademark name of Safurex®, offers lower corrosion rates and needs a lower level of oxygen for the passivation. The steel comprises, among others, the following elements, in % weight with respect to the total weight of the composition: Mn 0.3-4%, Cr 28-35%, Ni 3-10%, Mo 1.0-4.0%, N 0.2-0.6%, Cu max. 1.0%, W max. 2.0%. However, the problem of corrosion still exists and is especially important in the stripper distribution, which is under high temperature.

Patent US 7347903 discloses a corrosion resistant stainless steel, the composition of the steel comprising, among others (in % weight with respect to the total weight of the composition): Cr: 26% or more, but less than 28%, Ni: 6-10%, Mo: 0.2-1.7%, W: more than 2%, Cu: no more than 0.3%. However, the chromium content is limited to a maximum of 28% so as to prevent the precipitation of intermetallic phases and due to the problems of hot workability because of the non-uniform deformation of ferrite grains.

It is therefore desirable to provide a corrosion resistant material having an improved passive corrosion rate, especially when exposed to fluids comprising carbamate at high temperatures, such as for example in the stripper tubes, to thereby prolong the lifetime of the stripper tubes and at the same time have good enough structure stability of the materials of the stripper. Hence, it would be desirable to obtain an austenoferritic steel material with a high content of chromium while at the same time showing a good machinability and hot workability.

Patent WO2015/099530 describes a hot isostatic pressed ferritic-austenitic steel alloy, comprising, among others, the following elements, in % weight with respect to the total weight of the composition: Mn: 0-4.0%; Cr: more than 29-35%; Ni: 3.0-10%; Mo: 0-4.0%; N: 0.30-0.55%; Cu: 0-0.8%; W: 0-3.0%. Similarly, patent WO2015/097253 describes a ferritic-austenitic steel alloy comprising, among others, the following elements, in % weight with respect to the total weight of the composition: Mn: 0-4.0%; Cr: more than 29-35%; Ni: 3.0-10%; Mo: 0-4.0%; N: 0.30-0.55%; Cu: 0-0.8%; W: 0-3.0%. No Co is present in the steel alloys of these two patents. These two disclosures are directed to provide a duplex stainless steel particularly useful in making components for a urea production plant that require processing such as machining or drilling and providing a better endurance to the stripper tubes used in a urea synthesis plant.

Patent WO2017/013180 describes a corrosion resistant duplex stainless steel which is suitable for use in a plant for the production of urea. The composition of the duplex stainless steel that is claimed comprises, among others, the following elements, in % weight with respect to the total weight of the composition: Mn: max 2.0%; Cr: 29-31%; Ni: 5.0-9.0%; Mo: less than 4.0%; W: less than 4.0%; N: 0.25-0.45%; Cu: max 2.0%. In the composition of the steel no Co is present. The disclosure also relates to objects made of said duplex stainless steel, a method for the production of urea and to a plant for the production of urea comprising one or more parts made from said duplex stainless steel, and to a method of modifying an existing plant for the production of urea.

Patent WO2017/013181 discloses the use of a stainless steel as a construction material for a component in ammonium carbamate environment. The stainless steel comprises among others, the following elements, in % weight with respect to the total weight of the composition: Mn: max 1.5%; Cr: 29.0-33.0%; Ni: 6.0-9.0%; Mo: 3.0-5.0%; N: 0.40-0.60%; Cu: max 1.0%. In this patent application, Co is not part of the composition of the invention.

In the present invention we disclose an alternative duplex stainless steel composition with improved properties, including mechanical properties, strength, hot workability and resistance to corrosion.


SUMMARY OF THE INVENTION

In order to address one or more of the foregoing problems, one aspect of the present invention provides a duplex stainless steel alloy with high chromium content and good workability, the elementary composition of which comprises, in percentages by weight with respect to the total weight of the alloy:

C: 0.03% or less;

Si: 0.5% or less;

Mn: 2.5% or less;

Cr: more than 30.0% up to 35.0%;

Ni: 5.5% to 8.0%;

Mo: 2.0% to 2.5%;

W: 2.5% or less;

Co: 0.01% to 0.8%;

N: 0.3% to 0.6%;

Cu: 1.0% or less;

having one or more of the following:

Ca: 0.0040% or less;

Mg: 0.0040% or less;

one or more rare earth elements in a total amount of 0.1% or less;

the remainder being Fe and unavoidable impurities; and

wherein the relationship CRC = 1.062*(Ni + Co) + 4.185*Mo is between 14.95 and 19.80.

It has been found that Ni, Co, Mo effectively increase corrosion resistance of a duplex stainless steel (having the particular composition of the invention) if each element is used in a specific content range and the contents of the three elements are linked to one another by a composition parameter CRC.

Although some documents mention the presence of Co in duplex stainless steel with good corrosion properties, such as WO2006/049572, none of the test examples disclosed therein fall within the scope of the present invention, i.e. the percentages by weight of the elements comprising the test charges fall outside the ranges defined in the present invention. Furthermore, document WO2006/049572 fails to mention the CRC relationship as defined in the present invention.

Further aspects of the invention are:

- A tube of the duplex stainless steel according to the present disclosure, in particular a stripper tube or a liquid distributor for a plant for production of urea.
- A coil of the tubes of the duplex stainless steel according to the present disclosure.
- A bar, plate, or forging piece of the duplex stainless steel according to the present disclosure.
- A product in the piping system of an urea plant (tees, elbows, weldolets, gaskets, flanges...), a valve, a fitting, a welding consumable (rod, strip, wire), a ferrules of the duplex stainless steel according to the present disclosure.
- A duplex stainless steel to be used in a urea environment, i.e. in contact with a fluid comprising ammonium carbamate.

DETAILED DESCRIPTION OF THE INVENTION

The elementary composition of the duplex stainless steel alloy is as defined in the present disclosure. Unless otherwise indicated, all percentages relating to the content of an element or to a collection of elements refers to the weight percentage with respect to the total weight of the alloy.

Carbon (C) improves mechanical strength but for this invention high contents need to be avoided due to the risk of carbides precipitation. The amount of C is not higher than 0.03%, preferably from 0.001% to 0.02%.

Silicon (Si) is used for deoxidization in the steel mill. It is a ferrite forming element. High amounts should be avoided because it increases the possibility of precipitation of intermetallic phases. Thus the amount of Si is not higher than 0.5%, preferably from 0.001% to 0.5%.

Manganese (Mn) increases the solubility of N, but as it has a negative impact on corrosion resistance, the amount of Mn content is not higher than 2.5%, preferably from 0.5% to 2.2%, in particular from 1% to 2.2%.

Chromium (Cr) increases corrosion resistance and in this invention, under urea production conditions, Cr improves the corrosion behavior and allows higher process temperatures. Cr is a beneficial element for other types of corrosion such as pitting or crevice. On the other hand, high values of Cr increase the possibility of precipitation of intermetallic phases and they are detrimental to hot workability. For these reasons, Cr amount is higher than 30% but lower than 35.0%, preferably from 30.5% to 35.0%, preferably 30.5% to 33.0%, more preferably 30.5% to 32.0%, in particular 30.5% to 31.6%.

Nickel (Ni) is an austenite forming element. A certain value of Ni content is needed to maintain an equilibrium between ferrite and austenite phases. Several investigations reported Ni content in austenitic steels as detrimental under low oxygen conditions. For ferritic steels with low Ni content the corrosion rate under these conditions is reported to be very low. For this reason, it is said that for duplex grades a low content of Ni is better to increase corrosion resistance in ammonium carbamate under free oxygen conditions. On the contrary, we have found that in duplex materials where Ni content is lower than in austenitic materials, a minimum Ni content has a good impact in corrosion resistance. For this reason, Ni amount is higher than 5.5 %, but since it has a negative impact on intermetallic precipitation, the maximum value is 8.0%. Ni content is preferably from 6.0% to 7.5%. In this invention, instead of Ni, N and Co are used to obtain the balance between ferrite austenite phases and not to deteriorate corrosion resistance.

Molybdenum (Mo) is a ferrite forming element. It accelerates the precipitation of intermetallic phases especially at the high levels of Cr defined in this invention, so values higher than 2.5% must be avoided. On the other hand, a certain amount of Mo has been found to be beneficial for corrosion resistance in ammonium carbamate solution under free oxygen conditions, for this reason a minimum amount of 2.0% must be added.

Tungsten (W) is a ferrite forming element. It is an element which enhances general corrosion resistance. In particular, in the same way as Cr, Mo and N it increases pitting and crevice resistance. However, W accelerates the precipitation of intermetallic phases so its content is maintained below 2.5%, preferably from 0.001% to 2.5%, preferably from 0.02% to 1.0%.

Cobalt (Co) strengthens the ferrite matrix and has a light positive effect as austenite forming element. In seeking to reduce the content of Ni the inventors have found that Co can work as a partial substitute and surprisingly has the additional advantage of improving the resistance to corrosion of the composition of the invention. Co is added to obtain a balance between ferrite austenite phases and to improve corrosion resistance in duplex stainless steels resistant in urea environments. Co has also a positive effect on intermetallic precipitates because its addition, contrary to Ni, reduces the precipitation of intermetallic phases. For these reasons, Co content is in the range between 0.01% and 0.8%, preferably from 0.01% to 0.6%, preferably from 0.02% to 0.6%, in particular from 0.02% to 0.3%.

Nitrogen (N) is an austenite forming element. It enhances the microstructure stability delaying the precipitation of intermetallic phases and it increases the strength of the matrix. N is also added to increase the pitting and crevice corrosion resistance. For these reasons, a minimum value of 0.3% is added. On the other hand, higher N values lead to poor hot workability, therefore the maximum value is limited to 0.6%. N content is preferably from 0.35% to 0.6%, in particular form 0.4% to 0.6%.

Copper (Cu) has in general a positive effect depressing the intermetallic precipitation kinetics when high amounts of Mo and W are present. However, for urea production Cu is a harmful element because it forms complex ions with ammonia and deteriorates corrosion resistance. Therefore, Cu content is limited to 1% maximum, preferably from 0.001% to 0.9%, preferably from 0.001% to 0.5%, more preferably from 0.10% to 0.45%, in particular 0.10% to 0.40%.

Due to the high content of Cr and N needed in this invention hot workability could be reduced. In order to facilitate the hot forming of the steel one or more of the following elements are added:

Calcium (Ca): 0.0040% or less, preferably from 0.001% to 0.0040%;

Magnesium (Mg): 0.0040% or less, preferably from 0.001% to 0.0040%;

One or more rare earth elements in a total amount of 0.1% or less, preferably 0.05% or less. The rare earth elements may be selected from the group of Lanthanum (La), Cerium (Ce), Praseodymium (Pr) and mixtures thereof. Rare earth metals have very high deoxidation and desulphurization capacities and also decrease the average size of inclusions. They have a beneficial effect on hot workability based on the ability to combine with impurities that can segregate at grain boundaries (such as sulphur) and modify the shape and composition of the inclusions.

Phosphorus (P) and Sulphur (S) are impurities and should be maintained in values as low as possible. High amounts of S are detrimental to hot workability. Thus, the amount of S should be less than 0.005% and the P content should be less than 0.025%. Typical amounts can be less than 0.0005% for S and less than 0.020% for P.

Experimental tests confirm that duplex stainless steel according to the invention, i.e. having a combined content of Ni, Co and Mo as previously defined, have a corrosion rate in urea environments (containing ammonium carbamate) significantly lower than prior art materials, even at high temperature/pressure and in oxygen-free conditions. In the present invention, Ni, Co and Mo are related with the corrosion resistance with the following formula: CRC = 1.062*(%Ni + %Co) + 4.185*%Mo, wherein CRC is in the range between 14.95 and 19.80, preferably between 14.95 and 19.00, more preferably between 14.95 and 18.00, more preferably between 14.95 and 17.50.

The ferrite content of the austenoferritic alloy according to the present invention is of importance for the corrosion resistance. Therefore, the ferrite content should be in the range of from 30% to 70% by volume, preferably in the range of from 35 to 60%vol., preferably in the range of from 40 to 60%vol.

Unless otherwise specified, all the elements composing the duplex stainless steel for the present invention can be combined in the different amounts and ranges described in the present disclosure.

Thus, according to the present invention, another composition of the duplex stainless steel may comprise:

C: 0.03% or less;
Si: 0.5% or less;
Mn: 2.5% or less;
Cr: 30.5% to 35.0%;
Ni: 5.5% to 8.0%;
Mo: 2.0% to 2.5%;
W: 0.02% to 1.0%;
Co: 0.01% to 0.8%;
N: 0.3% to 0.6%;
Cu: 1.0% or less;

having one or more of the following:

Ca: 0.0040% or less;
Mg: 0.0040% or less;
one or more rare earth elements in a total amount of 0.1% or less;
the remainder being Fe and unavoidable impurities; and
wherein the relationship CRC = 1.062*(Ni + Co) + 4.185*Mo is between 14.95 and 19.80.

The present invention also discloses an elementary composition that comprises, in percentages by weight:

C: 0.001% to 0.03%;
Si: 0.001% to 0.5%;
Mn: 0.001% to 2.5%;
Cr: more than 30.0% to 35.0%;
Ni: 5.5% to 8.0%;
Mo: 2.0% to 2.5%;
W: 0.4% to 0.8%;
Co: 0.01% to 0.8%;
N: 0.3% to 0.6%;
Cu: 0.001% to 1.0%;

having one or more of the following:

Ca: 0.001% to 0.0040%;
Mg: 0.001% to 0.0040%;
one or more rare earth elements in a total amount of 0.001% to 0.05%;
the remainder being Fe and unavoidable impurities; and
wherein the relationship CRC = 1.062*(Ni + Co) + 4.185*Mo is between 14.95 and 19.80.

Another exemplifying composition according to the present invention comprises, in percentages by weight:

C: 0.001% to 0.03%;

Si: 0.5% or less;

Mn: 0.5% to 2.2%;

Cr: 30.5% to 34.0%;

Ni: 5.5% to 8.0%;

Mo: 2.0% to 2.5%;

W: 2.5% or less;

Co: 0.01% to 0.8%;

N: 0.3% to 0.6%;

Cu: 1.0% or less;

having one or more of the following:

Ca: 0.0040% or less;

Mg: 0.0040% or less;

one or more rare earth elements in a total amount of 0.1% or less;

the remainder being Fe and unavoidable impurities; and

wherein the relationship CRC = 1.062*(Ni + Co) + 4.185*Mo is between 14.95 and 19.80.

Yet another composition according to the present invention comprises, in percentages by weight:

C: 0.02% or less;
Si: 0.001% to 0.5%;
Mn: 2.5% or less;
Cr: 30.5% to 32.0%;
Ni: 5.5% to 8.0%;
Mo: 2.0% to 2.5%;
W: 0.1% to 1.0%;
Co: 0.01% to 0.8%;
N: 0.3% to 0.6%;
Cu: 0.15% to 0.25%;

having one or more of the following:

Ca: 0.0040% or less;
Mg: 0.0040% or less;
La, Ce, Pr or other rare earth elements: 0.1% or less
the remainder being Fe and occurring impurities and additives; and
wherein the relationship CRC = 1.062*(Ni + Co) + 4.185*Mo is between 14.95 and 19.80.

Another composition according to the present invention comprises, for example, in percentages by weight:

C: 0.03% or less;
Si: 0.5% or less;
Mn: 0.001% to 2.2%;
Cr: 31% to 35.0%;
Ni: 6.0% to 7.5%;
Mo: 2.0% to 2.5%;
W: 2.5% or less;
Co: 0.01% to 0.8%;
N: 0.4% to 0.6%;
Cu: 0.9% or less;

having one or more of the following:

Ca: 0.0040% or less;
Mg: 0.0040% or less;

one or more rare earth elements in a total amount of 0.1% or less;
the remainder being Fe and unavoidable impurities; and
wherein the relationship CRC = 1.062*(Ni + Co) + 4.185*Mo is between 14.95 and 19.80.

Another example according to this invention comprises a composition, in percentages by weight:

C: 0.03% or less;

Si: 0.5% or less;

Mn: 0.5% to 2.2%;

Cr: 30.5% to 35.0%;

Ni: 5.5% to 6.5%;

Mo: 2.0% to 2.5%;

W: 0.001% to 2.5%;

Co: 0.01% to 0.6%;

N: 0.35% to 0.6%;

Cu: 1.0% or less;

having one or more of the following:

Ca: 0.0040% or less;

Mg: 0.0040% or less;

one rare earth element selected from La, Ce, Pr or a combination thereof: 0.05% or less

the remainder being Fe and unavoidable impurities; and

wherein the relationship CRC = 1.062*(Ni + Co) + 4.185*Mo is between 14.95 and 19.80.

For example, the present invention discloses an elementary composition that comprises, in percentages by weight:

C: 0.03% or less;

Si: 0.5% or less;

Mn: 2.2% or less;

Cr: 31.0% to 32.0%;

Ni: 5.5% to 8.0%;

Mo: 2.0% to 2.5%;

W: 2.5% or less;

Co: 0.02% to 0.4%;

N: 0.3% to 0.6%;

Cu: 0.001% to 1.0%;

having one or more of the following:

Ca: 0.0040% or less;
Mg: 0.0040% or less;
one rare earth element selected from La, Ce, Pr or a combination thereof: 0.05% or less
the remainder being Fe and unavoidable impurities; and
wherein the relationship CRC = 1.062*(Ni + Co) + 4.185*Mo is between 14.95 and 19.80.

Another exemplifying composition according to the present invention comprises, in percentages by weight:

C: 0.03% or less;
Si: 0.5% or less;
Mn: 2.0% or less;
Cr: 30.5% to 33.0%;
Ni: 5.5% to 8.0%;
Mo: 2.0% to 2.5%;
W: 0.2% to 1.0%;
Co: 0.02% to 0.4%;
N: 0.3% to 0.6%;
Cu: 1.0% or less;

having one or more of the following:

Ca: 0.001% to 0.0040%;
Mg: 0.001% to 0.0040%;
La, Ce, Pr or other rare earth elements: 0.001% to 0.1%
the remainder being Fe and unavoidable impurities; and
wherein the relationship CRC = 1.062*(Ni + Co) + 4.185*Mo is between 14.95 and 19.80.

A further example comprises another composition according to the present invention, in percentages by weight:

C: 0.02% or less;

Si: 0.5% or less;

Mn: 0.5% to 2.2%;

Cr: 30.5% to 34.0%;

Ni: 5.5 to 8.0%;

Mo: 2.0 to 2.5%;

W: 0.02 to 1.0%;

Co: 0.02 to 0.6%;

N: 0.3 to 0.6%;

Cu: 0.20% to 0.9%;

having one or more of the following:

Ca: 0.0040% or less;

Mg: 0.0040% or less;

one or more rare earth elements in a total amount of 0.1% or less;

the remainder being Fe and unavoidable impurities; and

wherein the relationship CRC = 1.062*(Ni + Co) + 4.185*Mo is between 14.95 and 19.80.

The duplex stainless steel as defined in the present disclosure may be manufactured according to conventional methods, i.e. casting, followed by hot working and/or cold working and optional additional heat treatment.

Casting is a process of steel solidification by pouring the steel into a mold. Hot working is a process were steel is plastically deformed above its recrystallization temperature so that new strain-free grains are formed due to the combined action of load and heat. Temperature for hot working is critical to control grain growth. Examples of hot working processes are forging, rolling and extrusion. Cold working refers to plastically deforming a steel below the recrystallization temperature. This causes a permanent change in the steel by introducing dislocations within its structure. The steel is then work-hardened. Some methods of cold working include cold rolling, cold pilgering and cold drawing. Steels are heat-treated to produce a great variety of microstructures and properties. Generally, heat treatment uses phase transformation during heating and cooling under controlled conditions to change a microstructure in a solid state. In heat treatment, the processing is most often entirely thermal and modifies only the structure. Annealing, normalizing, tempering and quenching are different types of well-known heat treatments.

The duplex stainless steel as defined in the present disclosure may also be produced as a powder product by for example a hot isostatic pressure process.

Hot isostatic pressing is a process to consolidate metallic powder produced by atomization and confined in a sheet metal capsule into a full density piece by applying high pressure and temperature.

In the duplex stainless steel defined in the invention, the presence of Co, Ni and Mo so that the relationship CRC = 1.062*(Ni + Co) + 4.185*Mo is between 14.95 to 19.80 yields better properties in terms of corrosion (see Table 3, Example 3). Said table discloses the corrosion rate for 8 probes corresponding to different duplex steel compositions. Five of them (A , D , E , G , H) have a composition according to the present invention, while three of them (B, C and F) do not, being comparative examples. The former compositions according to the invention have a corrosion rate lower than 0.14 mm/year after 13 days and, even, after 1 month. That is, the compositions having a CRC value between 15 and 20 show higher resistance to corrosion, while maintaining other mechanical properties. Further, in the compositions according to the invention there is little difference between the corrosion after 13 days and after 1 month. On the contrary, those compositions that are not according to the invention show a higher corrosion rate in the tests performed. This is an unexpected effect that the skilled person would not foresee in the light of the state of the art.

As a result of the specific compositions of the duplex stainless steels of the invention, the following additional advantages are also achieved over the prior art, in particular in case of use in a high pressure apparatus of the urea plant:

- the corrosion rate in a piece of equipment (apparatus/component or part thereof) made of the duplex stainless steels of the invention drastically decreases with respect to a piece of equipment made of prior art materials;

- the need of passivation air is drastically reduced or even eliminated;

- the thickness of the apparatus/component, in particular of the high pressure pipes (for example, in the urea stripper) can be reduced, thus resulting in a significant reduction of the total weight and cost of the high pressure section, since the duplex stainless steels of the invention also have high mechanical characteristics;

- the temperature at the bottom of the stripper can be increased without increasing the corrosion rate;

- it is possible to avoid using, for the high pressure equipment, different materials with different prescription in terms of material specifications.

The present invention also discloses a method for producing urea wherein at least one part of the equipment of the urea production plant comprises the duplex stainless steel of the invention. It is also disclosed herein a plant for the production of urea wherein said plant comprises one or more parts comprising the hereinabove or hereinafter duplex stainless steel. Further disclosed herein is the use of the duplex stainless steel of the invention in a urea synthesis process.

APPLICATIONS

The present disclosure may also relate to a tube comprising the duplex stainless steel of the present disclosure. In particular, said tube can be a stripper tube for a urea production plant, or a liquid distributor for a stripper in a urea manufacturing plant.

A frequently used process for the preparation of urea is the carbon dioxide stripping process. In this process, the synthesis section is followed by one or more recovery sections. The synthesis section comprises a reactor, a stripper, a condenser and, preferably but not necessarily, a scrubber in which the operating pressure is in between 120 and 180 MPa. In the synthesis section, the urea solution leaving the urea reactor is fed to a stripper in which a large amount of non-converted ammonia and carbon dioxide is separated from the aqueous urea solution.

Such a stripper can be a shell- and tube-heat exchanger in which the urea solution is fed at the top portion of the tube in the stripper and carbon dioxide, for use in urea synthesis, is fed to the bottom portion of the tube in the stripper. At the shell part of the stripper, steam is added to heat the solution. The urea solution leaves the heat exchanger at the bottom portion, while the vapor phase leaves the stripper at the top portion. The vapor leaving the stripper contains ammonia, carbon dioxide, inert gases and a small amount of water.

Said vapor is condensed in a falling film type heat exchanger or a submerged type of condenser that can be a horizontal type or a vertical type. The formed solution, which contains condensed ammonia, carbon dioxide, water and urea, is recirculated together with the non-condensed ammonia, carbon dioxide and inert vapor.

The present disclosure also relates to a plurality of butt-welded and seam-welded tubes reeled into a coil formed from the duplex stainless steel as defined in the present disclosure.

The present disclosure also relates to the use of a duplex stainless steel as defined in the present disclosure in a urea synthesis process. This use of the duplex stainless steel as defined in the present disclosure can be for reducing corrosion of one or more parts of the equipment used in said process, such as of one or more parts of a high pressure urea synthesis section, such as of parts that come in contact with carbamate solution.

The duplex stainless steel may be used for other applications, wherein good corrosion resistance is required for the equipment. Some examples of possible uses of the duplex stainless steel include use as a construction material in process chemistry components which are intended to be used in nitric acid environments, melamine production, use in the paper and pulp industry, such as in white liquor environment, and as welding wire material. The steel may be used for example for manufacturing seamless tubes, welded tubes, bars, flanges, couplings and sheet-metal. Also, it can be used in tubes, pipes, all type of products in the piping system (tees, elbows, weldolets, gaskets, flanges...), valves, fittings, welding consumables (rod, strip, wire), plates, forgings, or ferrules.

Due to its high corrosive resistance to various corrosive media, such as chlorides, $CO_2$ and $H_2S$, the duplex of the present invention is appropriate to be used in onshore/offshore environments in the oil and gas industry. Subsea umbilical tubes, which are a collection of electric and/or fiber optic cables and stainless steel tubes used for hydraulic control and chemical injection purposes from the land or sea surface to the bottom of the sea, may be produced from this duplex stainless steel. Downhole tubes, which are tubes installed inside a drill-hole (oil and gas wells) and therefore have to be resistant to the sea water and to the substances they transport, may be manufactured of this duplex stainless steel.

The duplex of the present invention is also suitable for subsea applications such as flowline pipe / line pipe, riser tubes, manifold piping, Christmas tree piping, hydraulic lines for drilling risers.

The duplex of the present invention may be suitable as well for the applications listed below:

- Tubing for heat exchangers in refineries, chemical industries, process industries and other industries using seawater or chlorinated seawater as coolant.
- Evaporator tubing for production of corrosive salts, e.g. chlorides, sulfates and carbonates.
- Desalination plants: Pressure vessels for reverse osmosis units, tubes and pipes for seawater transport, heat exchanger tubing.
- Geothermal wells: Heat exchangers in geothermal exploitation units, systems exposed to geothermal or high salinity brines, tubing and casing for production.
- Oil refining and petrochemical and gas processing: Tubes and pipes where the process environment contains a high amount of chlorides, or is contaminated with hydrochloric acid.
- Pulp and paper production: Material for chloride-containing bleaching environments.
- Chemical processing: Organic acid plants, also when process solutions are contaminated with e.g. chlorides.
- Mechanical components requiring high strength: Propeller shafts and other products subjected to high mechanical load in seawater and other chloride-containing environments.
- Desulfurization units: Reheater tubes in flue gas desulfurization systems.

EXAMPLES

The following examples are provided with the intent of further illustrating the present invention, but should in no case be interpreted as to be limiting of the present invention.

Example 1: Steel manufacturing

The chemical compositions in weight percentage shown in Table 1 were manufactured and tested for mechanical and corrosion properties.

Table 1. Chemical compositions for the laboratory heats, with elements in % weight.

| Heat | C | Si | Mn | Ni | Cr | Mo | W | Co | N | Cu |
|------|------|------|------|------|-------|------|------|------|------|------|
| A | 0.020 | 0.39 | 1.60 | 6.07 | 31.54 | 2.13 | 0.84 | 0.28 | 0.56 | 0.88 |
| B (comp) | 0.027 | 0.18 | 1.02 | 5.50 | 32.35 | 1.03 | 2.16 | 0.54 | 0.54 | 1.09 |
| C (comp) | 0.020 | 0.26 | 3.22 | 5.20 | 31.50 | 2.15 | 0.69 | 0.28 | 0.48 | 0.23 |
| D | 0.018 | 0.45 | 2.13 | 7.20 | 30.70 | 2.10 | 0.02 | 0.56 | 0.40 | 0.22 |
| E | 0.016 | 0.33 | 2.16 | 7.45 | 31.05 | 2.10 | 0.97 | 0.04 | 0.48 | 0.36 |
| F (comp) | 0.048 | 0.47 | 2.14 | 6.60 | 32.70 | 0.75 | 1.99 | 0.52 | 0.37 | 0.21 |
| G | 0.020 | 0.27 | 2.15 | 7.25 | 31.40 | 2.08 | 0.95 | 0.03 | 0.36 | 0.36 |
| H | 0.025 | 0.33 | 0.87 | 6.99 | 30.77 | 2.08 | 0.00 | 0.02 | 0.44 | 0.22 |

The heats were produced in a vacuum furnace and then casted into 10 kg ingots. Those ingots were hot forged to round bars and, subsequently, cold formed and solution annealed at the appropriate temperature and cooling rate. Test samples were obtained from the final solution annealed bars.

Solution annealing temperature and cooling rate are critical to assure the correct microstructure, free of intermetallic phases and with an austenite/ferrite balance close to 50/50 %. Moreover, the duplex stainless steel of the present invention has high chromium and nitrogen contents, which enhance the possibility of chromium nitride precipitation, especially of those called "quenched-in" chromium nitrides. Quenched-in chromium nitrides are produced when cooling down too fast from high temperatures, due to the supersaturation of nitrogen in the ferritic phase.

The solution annealing temperature for each experimental heat was determined by thermodynamic calculations, whereas different cooling rates were tried for each solution annealing treatment. The produced solution annealed bars were then observed by light and scanning electron microscopies to quantify the amount of intermetallic phases, austenite and ferrite and chromium nitrides. If some intermetallic phases or chromium nitrides appeared or the austenite/ferrite balance was not correct, the temperature and cooling rate for the solution annealing treatment was modified accordingly.

After having produced bars of each chemical composition in Table 1, samples for mechanical and corrosion properties evaluation were prepared.

Example 2: Mechanical properties

Tensile strength and hardness were measured in all the laboratory heats. Results are depicted in Table 2. For all the heats, yield and tensile strengths are high, and very good elongation values have been obtained. All the proposed new chemical compositions present superior mechanical properties compared to conventional duplex grades.

Table 2. Mechanical properties for the produced laboratory heats.

| Heat | Rp0,2 (MPa) | Rm (MPa) | A (%) | HV10 |
|------|-------------|----------|-------|------|
| A | 775 | 954 | 35 | 298 |
| B (comp) | 759 | 933 | 32 | 294 |
| C (comp) | 764 | 941 | 35 | 294 |
| D | 712 | 877 | 32 | 274 |
| E | 763 | 944 | 35 | 294 |
| F (comp) | 783 | 963 | 36 | 301 |
| G | 754 | 928 | 34 | 289 |
| H | 736 | 906 | 33 | 283 |

Rp0,2 accounts for yield strength,
Rm accounts for tensile strength,
A accounts for elongation,
HV10 accounts for Vickers hardness.

Example 3: Corrosion testing

The corrosion behavior of the laboratory heats was checked via immersion tests that were conducted in a 5-liter Zirconium autoclave. The autoclave was equipped with adequate feed and discharge lines and a stirrer. The test solution contained a mixture of urea, ammonia and water, at concentrations similar to those of the urea synthesis process. Temperature and pressure for the experiments were set in the upper level of the typical ranges measured in a urea stripper, 180-210ºC and 140-200 bar, respectively. The test solution was degassed before starting the tests to eliminate oxygen from the system. These experiments were designed to simulate the most severe conditions in a stripper of a urea plant without oxygen injection; note that under current working conditions in a urea plant, the stainless steel would perform even better, due to the presence of low amounts of oxygen and less aggressive conditions.

Test duration was 13 and 30 days. ASTM G31 (Standard Practice for Laboratory Immersion Corrosion Testing of Metals) standard indications were followed for test specimen preparation and the corrosion rate was measured by the gravimetric method.

The results of these tests are summarized in Table 3.

Table 3. Compositions for laboratory heats, with the elements in % weight with corresponding Corrosion Rate (CR) values after 13 days, 1 month and Corrosion Rate Coefficient (CRC).

| Heat | CR (mm/year) 13 days | CR (mm/year) 1 month | CRC |
|---|---|---|---|
| A | 0.09 | 0.09 | 15.66 |
| B (comp) | 0.22 | - | 10.73 |
| C (comp) | 0.15 | - | 14.82 |
| D | 0.11 | 0.12 | 17.03 |
| E | 0.10 | 0.10 | 16.74 |
| F (comp) | 0.21 | 0.41 | 10.70 |
| G | 0.09 | 0.10 | 16.44 |
| H | 0.09 | 0.11 | 16.15 |

From the analysis of these results, the present inventors have found that Ni, Co and Mo have a high impact on the corrosion rate, which can be quantified from the named Corrosion Rate Coefficient (CRC) defined as follows:

$$CRC = 1.062 \ast (\%Ni + \%Co) + 4{,}185 \ast \%Mo$$

A corrosion rate of around 0.14 mm/year is considered acceptable for the duplex stainless steel of this invention in oxygen free environments. When CRC satisfies 14.95 < CRC < 19.80, CR values are significantly lower.

This corrosion value would even be significantly lower in working conditions in a urea plant, since the experimental set-up conditions are much more aggressive. Heats B, C and F do not fulfil this requirement so that these chemical compositions are not valid for the duplex stainless steel of this invention, being comparative examples.

Claims

1. A duplex stainless steel alloy, **characterized in that** it contains the following elements, in % by weight with respect to the total weight of the composition:

   C: 0.03% or less;
   Si: 0.5% or less;

Mn: 2.5% or less;
Cr: more than 30.0% up to 35.0%;
Ni: 5.5% to 8.0%;
Mo: 2.0% to 2.5%;
W: 2.5% or less;
Co: 0.01% to 0.8%;
N: 0.3% to 0.6%;
Cu: 1.0% or less;

having one or more of the following:

Ca: 0.0040% or less;
Mg: 0.0040% or less;
one or more rare earth elements in a total amount of 0.1% or less;
the remainder being Fe and unavoidable impurities; and
wherein the relationship CRC = 1.062*(Ni + Co) + 4.185*Mo is between 14.95 and 19.80.

2. The alloy of claim 1, comprising 30.5-35.0% Cr.

3. The alloy according to any one of claims 1-2, comprising 30.5-32.0% Cr.

4. The alloy according to any one of claims 1-3, comprising 30.5-31.6% Cr.

5. The alloy according to any one of claims 1-4, comprising 0.10-0.40% Cu.

6. The alloy according to any one of claims 1-5, comprising 0.02-0.6% Co.

7. The alloy according to any one of claims 1-6, comprising 6.0-7.5% Ni.

8. The alloy according to any one of claims 1-7, comprising 0.5-2.2% Mn.

9. The alloy according to any one of claims 1-8, comprising 0.02-1% W.

10. The alloy according to any one of claims 1-9, wherein CRC is between 14.95 and 18.00.

11. The alloy according to any one of claims 1-9, wherein the rare earth element is selected from the group of La, Ce, Pr and mixtures thereof.

12. Use of a duplex stainless steel alloy as defined in any one of claims 1-11 in a urea synthesis process.

13. A tube comprising the alloy as defined in any one of claims 1-11.

14. The tube of claim 11, wherein said tube is a stripper tube for a plant for the production of urea or a liquid distributor for a stripper for a plant for production of urea.

15. A product in a piping system (tees, elbows, weldolets, gaskets, flanges), a valve, a fitting, a welding consumable (rod, strip, wire), a plate, a forging piece, or a ferrule comprising the alloy defined in any one of claims 1 to 11.

Europäisches
Patentamt

European
Patent Office

Office européen
des brevets

**EUROPEAN SEARCH REPORT**

Application Number

EP 17 38 2900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2006/049572 A1 (SANDVIK INTELLECTUAL PROPERTY [SE]; KANGAS PASI [SE]; JAKOBSSON KARIN) 11 May 2006 (2006-05-11)<br>* claims 1, 18,21; examples 5,6; table 1 *<br>* page 1 *<br>* page 6, line 32 - page 7, line 25 *<br>* page 11, lines 14-20 *<br>----- | 1-15 | INV.<br>C22C38/00<br>C22C38/02<br>C22C38/42<br>C22C38/44<br>C22C38/52<br>C22C38/58<br>C22C38/04 |
| A,D | WO 2015/099530 A1 (STAMICARBON [NL]) 2 July 2015 (2015-07-02)<br>* page 1 - page 3; claims 1, 7-11 *<br>----- | 1-15 | |
| A | JP H08 13094 A (SUMITOMO METAL MINING CO; TAIHEI KINZOKU KOGYO KK) 16 January 1996 (1996-01-16)<br>* paragraph [0012]; claims 1,3; table 1 *<br>* abstract *<br>----- | 1-15 | |
| A | JP H09 209087 A (SUMITOMO METAL MINING CO) 12 August 1997 (1997-08-12)<br>* paragraphs [0020], [0027], [0035]; claims 1,2; tables 1,3 *<br>* abstract *<br>----- | 1-15 | |

TECHNICAL FIELDS
SEARCHED    (IPC)

C22C
C21D

The present search report has been drawn up for all claims

| Place of search | Date of completion of the search | Examiner |
|---|---|---|
| The Hague | 23 March 2018 | Rausch, Elisabeth |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 38 2900

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2018

| Patent document cited in search report | | | Publication date | Patent family member(s) | | | Publication date |
|---|---|---|---|---|---|---|---|
| WO 2006049572 | A1 | | 11-05-2006 | AU | 2005301376 | A1 | 11-05-2006 |
| | | | | CA | 2586452 | A1 | 11-05-2006 |
| | | | | CN | 101057002 | A | 17-10-2007 |
| | | | | EP | 1812614 | A1 | 01-08-2007 |
| | | | | JP | 2008519165 | A | 05-06-2008 |
| | | | | KR | 20070073870 | A | 10-07-2007 |
| | | | | NO | 341532 | B1 | 04-12-2017 |
| | | | | US | 2008138232 | A1 | 12-06-2008 |
| | | | | WO | 2006049572 | A1 | 11-05-2006 |
| WO 2015099530 | A1 | | 02-07-2015 | AR | 098955 | A1 | 22-06-2016 |
| | | | | AU | 2014370512 | A1 | 04-08-2016 |
| | | | | CA | 2934867 | A1 | 02-07-2015 |
| | | | | CN | 105940130 | A | 14-09-2016 |
| | | | | EA | 201691334 | A1 | 30-11-2016 |
| | | | | EP | 3087212 | A1 | 02-11-2016 |
| | | | | US | 2016325261 | A1 | 10-11-2016 |
| | | | | WO | 2015099530 | A1 | 02-07-2015 |
| JP H0813094 | A | | 16-01-1996 | NONE | | | |
| JP H09209087 | A | | 12-08-1997 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9500674 A
- US 7347903 B
- WO 2015099530 A
- WO 2015097253 A
- WO 2017013180 A
- WO 2017013181 A
- WO 2006049572 A